# EUROPEAN PATENT APPLICATION

(11) **EP 1 550 526 A1**
(43) Date of publication of application: **06.07.2005**
(21) Application number: 03797566.1
(22) Date of filing: 09.09.2003
(51) Int. Cl.: B23K 9/16, B23K 9/23, B23K 35/30

(54) **WELDING METHOD USING WELDING MATERIAL OF LOW TRANSFORMATION TEMPERATURE**

(30) Priority: 09.09.2002 JP 2002262235; 09.09.2002 JP 2002262236
(71) Applicant: National Institute for Materials Science, Tsukuba-shi, Ibaraki 305-0047 (JP)
(72) Inventor: OTA, Akihiko, Nat. Institute for Materials Science, Tsukuba-shi, Ibaraki 305-0047 (JP); SUZUKI, N., Nat. Institute for Materials Science, Tsukuba-shi, Ibaraki 305-0047 (JP); MAEDA, Yoshio Nat. Institute for Materials Science, Tsukuba-shi, Ibaraki 305-0047 (JP)
(74) Representative: Calamita, Roberto
(86) International application number: PCT/JP2003/011513
(87) International publication number: WO 2004/026519

(57) **Abstract**

An arc welding method using a welding material having a low transformation temperature, characterized in that it is carried out by the use of a shielding gas consisting of a rare gas alone or a mixed gas of a rare gas and a small amount of an oxygen gas; and an additional welding method using a welding material having a low transformation temperature, characterized in that it is carried out while moving a weld line in the form of a straight line. The former method allows the enhancement of a Charpy value in combination with improved fatigue strength, and the latter allows the experience of heat history of the material having a low transformation temperature to be suppressed, resulting in the prevention of weld crack in combination with an improved fatigue strength.

## Description

### Technical Field

The present invention relates to a welding method using a welding material having a low transformation temperature, and more particularly a first aspect of the invention relates to a welding method using a welding material having a low transformation temperature capable of enhancing a Charpy value as well as fatigue strength.

A second aspect of the invention relates to a welding method for preventing weld crack by using a welding material having a low transformation temperature, in an additional welding of weld structure requiring a large fatigue strength in the weld zone.

### Background Art

In a conventional welding method, residual stress of tension is induced in the weld zone due to heat shrinkage following cooling after welding, and the fatigue strength of the weld zone is lowered to cause weld crack. To solve this problem, the present inventors have previously proposed a new welding method using a welding material having a low transformation temperature for arc welding of weld metals by using a welding material of which martensite transformation expansion expires at room temperature for completing the welding or near room temperature, and a shielding gas containing carbon dioxide.

This method has been already registered as patent (Japanese patent No. 3010211).

In this proposed new welding method, however, although the welding fatigue strength was extremely improved, the Charpy value (impact value) was not always sufficient. Hence its application was limited.

It is hence an object of the invention to present a new improved welding method which can enhance Charpy value as well as welding fatigue strength, in a welding method using a welding material having a low transformation temperature.

According to the welding method using a welding material having a low transformation temperature proposed previously by the inventors (Japanese patent No. 3010211), although the fatigue strength of weld structure is extremely improved, if attempted to improve the fatigue strength by applying compressive residual stress near the weld zone by additional welding, weld crack may be caused if heated repeatedly at high temperature near the repair area.

In a general welding method, hitherto, although the welding material has been selected so as not to cause weld crack if heated repeatedly and due attention has been paid to the shape of weld zone after welding, almost nothing has been considered about repeated heating of the welding material. Accordingly, when using a welding material of low transformation temperature for the purpose of improving the welding fatigue strength, the welding method is often same as the conventional method of heating the welding material repeatedly. In such a case, in spite of the expectation that the welding fatigue strength may be improved by using a welding material of low transformation temperature, weld crack occurs in the weld zone and the expected effect may not be exhibited sufficiently.

The invention is devised in the light of the above problems, and is intended to present a new additional welding method capable of securely enhancing the fatigue strength of weld zone by suppressing occurrence of weld crack by making use of the features of welding material of low transformation temperature confirmed to have excellent effects actually according to the proposal of the inventors.

### Disclosure of the Invention

To improve the welding fatigue strength and Charpy value as described above, the present invention firstly provides a welding method for a welding method using a welding material having a low transformation temperature, which comprises performing arc welding by using only rare gas as shielding gas. The present invention secondly provides a welding method for a welding method using a welding material having a low transformation temperature, which comprises performing arc welding by using a mixed gas of rare gas and oxygen gas as shielding gas, thirdly provides the welding method wherein the content of oxygen gas is 8% or less by volume, and fourthly provides the welding method wherein the welding method is TIG welding.

Further, to improve the fatigue strength of weld zone by suppressing occurrence of weld crack in additional welding as described above, the present invention fifthly provides a welding method for a welding method using a welding material having a low transformation temperature, which comprises performing additional welding while avoiding heat history of the welding material of low transformation temperature by welding temperature. The present invention sixthly provides the welding method being a welding method using a welding material having a low transformation temperature, wherein additional welding is performed from the upper side by way of the side face to the lower side of the welding toe part of end portion of a horizontal annex structure, seventhly provides the welding method wherein additional welding is performed while moving so that the weld line may become linear, and eighthly provides the welding method wherein the method is arc welding using a welding material having a low transformation temperature.

And the invention ninthly provides the welding method wherein only rare gas is used as shielding gas, tenthly provides the welding method wherein a mixed gas of rare gas and oxygen gas is used as shielding gas, and eleventhly provides the welding method wherein the content of oxygen gas is 8 % or less by volume.

### Brief Description of Drawings

Fig. 1 is a sectional view showing a welded state of an annex structure according to the invention.
Fig. 2 is a schematic view of front side of additional welding route according to the invention.
Fig. 3 is a sectional view showing a welded state of an annex structure according to a prior art.
Fig. 4 is a schematic view of front side of additional welding route according to a prior art.

### Description of The Reference Numerals

A Vertical plate
B Horizontal annex plate
   1 Existing weld member
   2 Additional weld member
   3 Weld line of additional weld
   4 Lower side of annex structure
   5 Lower side end of annex structure
   6 Side face of annex structure
   7 Upper side end of annex structure
   8 Upper side of annex structure
   9 Weld crack

### Best Mode For Carrying Out Invention

The invention is completed, as described above, on the basis of knowledge of unexpected excellent action and effect obtained as a result of intensive studies by the inventors.

The explanation begins with an arc welding method of the invention characterized by using a welding material having a low transformation temperature in order to enhance the Charpy value as well as the welding fatigue strength.

Hitherto, the shielding gas used in arc welding was an inert gas such as argon gas or helium gas as used in MIG welding (Metal Inert-Gas welding) or carbon dioxide alone, or a mixed gas of inert gas such as argon or helium with an active gas such as oxygen gas or carbon dioxide gas as used in MAG welding (Metal Active-Gas welding). Generally, carbon dioxide gas has been used mostly widely as shielding gas because it is inexpensive and easy to handle.

In "the welding method" (Japanese patent No. 3010211) of the prior art on which the present invention is based, too, carbon dioxide gas or mixed gas of carbon dioxide gas with other gas is used as shielding gas.

In the arc welding using a welding material of low transformation temperature, however, as a result of intensive studies by the inventors by varying the composition, welding temperature and other conditions, it is found extremely difficult to enhance the Charpy value of the weld metal while improving the welding fatigue strength.

In the process of repeated researches, it is known that the Charpy value of weld metal and fatigue strength can be both improved by using argon gas or helium gas, their mixed gas or rare gas, or a mixed gas of rare gas and oxygen gas, instead of carbon dioxide gas, as shielding gas. It was wholly unexpected, was quite out of expectation from the conventional knowledge or experience.

It must be herein noted that rare gas or oxygen gas mixed in the rare gas contains inevitable impurities.

In the method of using a welding material of low transformation temperature of the invention characterized by using rare gas alone or mixed gas of rare gas and oxygen gas, the gas metal arc welding method as general arc welding method can be employed, and further it is also preferred to employ the TIG welding method (Tungsten Inert-Gas welding method) by using tungsten as electrode, shielding the surrounding of the arc generated between the tungsten electrode and base metal with inert gas, fusing a supplied filler metal by arc heat, and applying to the base metal.

The content of the oxygen gas to be mixed in the rare gas is preferably 10% or less by volume, more preferably by 8 % or less. Addition of oxygen gas is effective for enhancing the stability of the arc.

According to the invention, by a simple technique of using rare gas alone or mixed gas of rare gas and oxygen gas as shielding gas, the Charpy value of weld metal can be enhanced together with the fatigue strength, and therefore the hitherto limited scope of application has been expanded.

For example, in "the welding method" using a welding material of low transformation temperature and shielding gas mainly composed of carbon dioxide disclosed in the welding method of the prior art (Japanese patent No. 3010211), the Charpy value of weld metal was 24J, and when welded by using a mixed gas composed of 98% of argon and 2% of oxygen as shielding gas in an embodiment of the invention, the Charpy value of the obtained weld metal is confirmed to be enhanced to 54J. In the case of TIG welding (Tungsten Inert-Gas welding) using the argon shielding gas, it is found to be 72J.

"The welding material of low transformation temperature" used in the invention may be the same as the compositions specified in the prior art (Japanese patent No. 3010211) proposed by the present inventors. It is the same in the case of additional welding described later.

That is, the welding material is a material which terminates its martensite transformation expansion at room temperature where the welding is complete or in its vicinity. Such welding material may be properly exemplified as alloy materials containing Ni and Cr. Generally, a preferred example is an iron-based alloy in the chemical composition (wt.%) of Ni: 2 to 20%, Cr: 2 to 20, C (carbon): 0.5 or less, Si: 0.8 or less, Mn: 2.0 or less, and Mo: 0.5 or less.

As required, of course, Nb, Ti, Al, W, Ta, V, Hf, or Zr may be added by 0.5% or less. The total content of metal elements excluding Ni and Cr should be preferably 5.0% or less.

Embodiments are shown below, and the invention is more specifically described. It must be noted, however, that the invention is not limited to the illustrated embodiments alone.

Table 1 shows an example of contained composition (excluding Fe) of the welding material of low transformation temperature used as welding wire.

**Table 1**

| Element | C | Si | Mn | P | S | Ni | Cr | Mo |
|---|---|---|---|---|---|---|---|---|
| Content (wt.%) | 0.02 | 0.75 | 1.93 | 0.013 | 0.006 | 9.42 | 9.31 | 0.13 |

Table 2 is a list of composition of shielding gas and welding conditions. Test numbers 1 and 2 relate to the conventional method using the welding material of low transformation temperature shown in Table 1, and test numbers 3 and 4 relate to the method of the invention.

In the conventional method, two types of shielding gas were used, that is, a shielding gas composed of 100% of carbon dioxide gas (test number 1), and a mixed gas composed of 80 % of argon gas and 20 % of carbon dioxide gas (test number 2).

In the method of the invention, a shielding gas composed of 98% of argon gas and 2 % of oxygen gas was used (test number 3).

To investigate the adaptability to TIG welding, a shielding gas composed of 100% of argon gas was used (test number 4).

**Table 2**

| Welding method | Shielding gas | Current (A) | Voltage (V) | Welding speed (cm/min.) | Input heat (MJ/m) | Remarks |
|---|---|---|---|---|---|---|
| 1 GMA^{*1} | 100%CO₂ | 350 | 34 | 130 | 5.5 | Conventional method |
| 2 MAG^{*2} | 80%Ar + 20%CO₂ | 350 | 32 | 130 | 5.2 | |
| 3 MAG | 98 % Ar + 2 % O₂ | 350 | 31 | 130 | 5.0 | Method of the invention |
| 4 TIG^{*3} | 100%Ar | 350 | 13 | 55 | 5.0 | |

| | | | | | | |
|---|---|---|---|---|---|---|
| *1. A method of welding while shielding the arc from atmosphere by passing inert gas from a nozzle concentric with electrode. | | | | | | |
| *2. A method of welding using a shielding gas mixing inert gas with an active gas such as oxygen or carbon dioxide gas in GMA welding method. | | | | | | |
| *3. A method of welding while fusing a base material and a filler metal by forming an arc between tungsten electrode and base material in inert gas. | | | | | | |

After welding in this welding condition, the Charpy value of the weld metal was measured, and the results are summarized in Table 3. As clear from Table 3, the Charpy values of weld metals of conventional method in test numbers 1 and 2 are respectively 20J and 24J, and the Charpy value by the welding method of the invention is 54J, and the Charpy value of the weld metal is extremely improved. Table 3 also shows results of evaluation of fatigue life 19 mm square T joint of SM570Q steel in a stress range of 350 MPa.

The Charpy value of weld metal in TIG welding is 72 J, and it is confirmed that the method of the invention can be applied to TIG welding.

**Table 3**

| Welding condition | Charpy value (J) | Fatigue life in stress range 350 MPa (days) | Remarks |
|---|---|---|---|
| 1 | 20 | 8.23 x 10⁴ | Conventional method |
| 2 | 24 | 7.83 x 10⁴ | |
| 3 | 54 | 4.82 x 10⁵ | Method of the invention |
| 4 | 72 | 3.02 x 10⁵ | |

The additional welding method of the invention is described below. In this method, first of all, what is characteristic is that high temperature history is avoided, such as repeated heating of welding material of low transformation temperature, in the case of additional welding by using a welding material of low transformation temperature.

In the conventional welding method, for example, when welding a horizontal plate material to a vertical plate, to prevent melt-down and maintain the shape of weld zone, welding was started from the lower side of the horizontal plate, and the weld line was raised while swinging right and left, as if switching back in the railroad, to weld up to the upper side of the plate material. In the conventional welding method, since the welding materials are piled up sequentially upward from the lower side while swinging the weld line right and left, the welding materials at the lower side once being cooled are heated again and again by the weld line passing through the upper side. When using conventional welding materials, there were no problems in this welding method.

However, when a welding material of low transformation temperature is used, if such conventional method is directly applied, the welding material of low transformation temperature is heated repeatedly, and weld crack is likely to occur, and the intended effect of enhancing the fatigue strength may not be realized sufficiently.

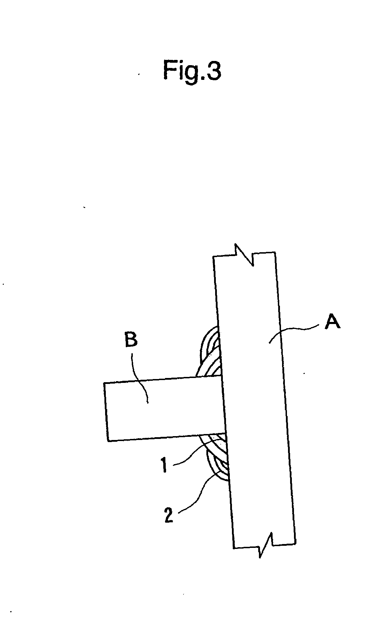

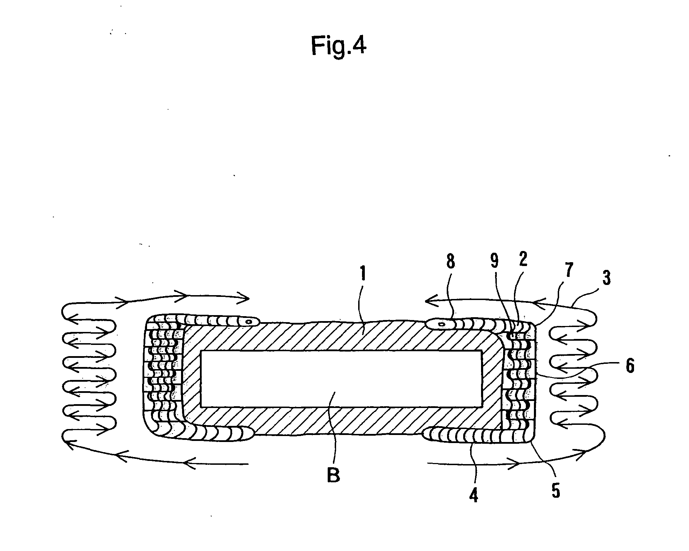

Fig. 3 and Fig. 4 show modes of conventional additional welding method by using a welding material of low transformation temperature. Fig. 3 is a side view showing an annex plate B welded to a vertical plate. Reference numeral 1 is an existing welding member, and 2 is a additional welding member. Fig. 4 is a schematic diagram seen from the left side in Fig. 3, in which the surrounding of the horizontal annex plate B is welded by the existing welding member 1, and the surrounding of the existing welding member 1 is covered with the additional welding member 2 made of a welding material of low transformation temperature.

According to the welding tracks shown in Fig. 4, in the conventional additional welding method, the lower side 4 of the horizontal annex plate B is welded, and the side face 6 is welded while moving the weld line 3 from the lower side to the upper side in a route as if switching back when a train climbs a steep hill on the railroad, and after reaching the upper side end 7, the upper side 8 is welded.

In this conventional additional welding method, in the process of climbing while swinging the weld line 3 right and left, the welding member at the lower side once being cooled is heated repeatedly by the weld line 3 passing over the upper side, and it has caused weld crack 9 in the repair weld zone.

In the present invention, in order to avoid heat history as much as possible while welding, contrary to the conventional method, welding is started from the upper side of the weld zone (the welding toe part) of the horizontal annex plate B, going down while moving so that the weld line becomes linear, and the lower side is finally welded, according to the best mode for carrying out the invention.

Welding from the upper side to the lower side is to make the most of the features of the welding material of low transformation temperature characterized by high viscosity and prevention of melt-down, and this method is easy in handling and excellent in heat radiating effect.

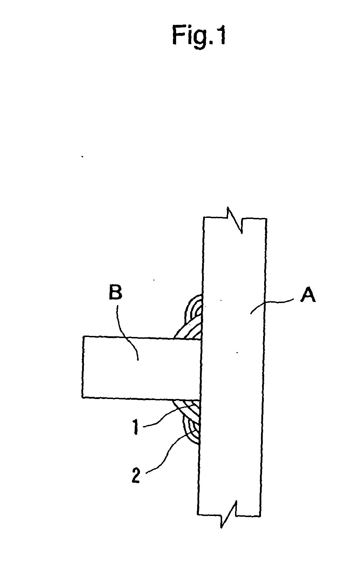

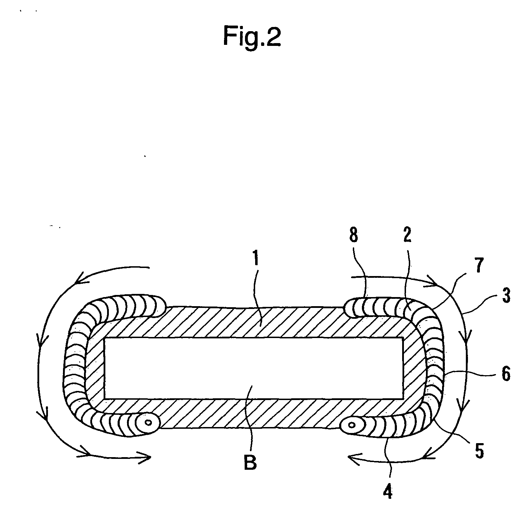

Fig. 1 and Fig. 2 show examples of welding method according to the invention. The surrounding of the horizontal annex plate B is welded by the existing welding member 1, and the surrounding of the existing welding member 1 is covered with a additional welding member 2 made of welding material of low transformation temperature. In the additional welding method of the invention, contrary to the conventional welding method shown in Fig. 4, after welding the upper side 8 of the horizontal annex B, the side face 6 of the annex is welded downward straightly, and the lower side 4 is reinforced by welding after the weld line 3 has reaches the lower side end 5 of the annex.

That is, according to the welding method of the invention, unlike the conventional welding method of piling up the welding materials sequentially by starting welding from the lower side and elevating while swinging the weld line to right and left as if switching back in the railroad, welding is done straightly from the upper side to the lower side, and the welding material of low transformation temperature is free from heat history, and weld crack can be prevented.

Moreover, using the welding material of low transformation temperature, the fatigue strength is enhanced owing to the effect of compressive residual stress induced near the weld zone.

Actually, additional welding was conducted by using, for example, JIS:SM570Q steel as the vertical plate A, and same material as the horizontal annex plate B, and using JIS:YGW21 as the welding material, and also using the additional welding material in the composition (wt.%) of C: 0.025, Si: 0.32, Mu: 0.70, Ni: 10.0, Cr: 10.0, Mo: 0.13, and balance of Fe.

In additional welding, in the condition of welding voltage of 28 V, welding current of 180 to 200 A, and welding speed of 50 to 60 cm/min, arc welding was conducted by supplying a shielding gas at 25L/min composed of 80% of argon gas and 20% of carbon dioxide gas.

As a result, the fatigue limit before additional welding of 40 MPa was improved to 85 MPa after additional welding.

In the conventional welding method, on the other hand, weld crack occurred.

This example is arc welding by using shielding gas, but nearly same effects are confirmed by the method of the invention in the case of arc welding with covered electrode without using shielding gas.

In the explanation herein, the terms "upper side" and "lower side" are used, in which it is supposed that the weld structure is as shown in Fig. 1 and Fig. 3, with the horizontal annex plate B welded to the vertical plate A.

Therefore, the invention is similarly applied to the weld structure with the entire plate in Fig. 1 and Fig. 3 being disposed by rotation, or in the structure of the horizontal annex plate B being welded in inclination without crossing orthogonally, by assuming the same disposition as in Fig. 1 and Fig. 3.

### Industrial Applicability

In the arc welding method using a welding material of low transformation temperature, the Charpy value can be enhanced as well as the welding fatigue strength.

In the additional welding method of weld structure demanding a high strength welding structure, a additional welding method enhanced in fatigue strength and capable of preventing weld crack can be presented.

## Claims

1. A welding method for a welding method using a welding material having a low transformation temperature, which comprises performing arc welding by using only rare gas as shielding gas.

2. A welding method for a welding method using a welding material having a low transformation temperature, which comprises performing arc welding by using a mixed gas of rare gas and oxygen gas as shielding gas.

3. The welding method according to claim 2, wherein the content of oxygen gas is 8% or less by volume.

4. The welding method of any of claims 1 to 3, wherein the welding method is TIG welding.

5. A welding method for a welding method using a welding material having a low transformation temperature, which comprises performing additional welding while avoiding heat history of the welding material of low transformation temperature by welding temperature.

6. The welding method according to claim 5, being a welding method using a welding material having a low transformation temperature, wherein additional welding is performed from the upper side by way of the side face to the lower side of the welding toe part of end portion of a horizontal annex plate.

7. The welding method according to claim 5 or 6, wherein additional welding is performed while moving so that the weld line may become linear.

8. The welding method according to any of claims 5 to 7, wherein the method is arc welding using a welding material having a low transformation temperature.

9. The welding method according to claim 8, wherein only rare gas is used as shielding gas.

10. The welding method according to claim 8, wherein a mixed gas of rare gas and oxygen gas is used as shielding gas.

11. The welding method of claim 10, wherein the content of oxygen gas is 8 % or less by volume.
